Europäisches Patentamt

European Patent Office

Office européen des brevets

(19)

(11) Veröffentlichungsnummer: **0 025 923**
**B1**

# EUROPÄISCHE PATENTSCHRIFT

(12)

(45) Veröffentlichungstag der Patentschrift:
**18.07.84**

(21) Anmeldenummer: **80105340.6**

(22) Anmeldetag: **06.09.80**

(51) Int. Cl.³: **A 22 C 11/00**, A 22 C 13/02

(54) Verfahren und Vorrichtung zum automatisierten Herstellen von Würsten im Strang unter Verwendung von synthetischem Schlauchmaterial für die Wursthüllen.

<table>
<tr><td>(30) Priorität: 22.09.79 DE 2938371<br>16.10.79 DE 2941872</td><td>(73) Patentinhaber: Kollross, Günter, Am Wallerstädter Weg 20, D-6080 Gross Gerau-Dornhelm (DE)</td></tr>
<tr><td>(43) Veröffentlichungstag der Anmeldung:<br>01.04.81 Patentblatt 81/13</td><td>(72) Erfinder: Kollross, Günter, Am Wallerstädter Weg 20, D-6080 Gross Gerau-Dornhelm (DE)</td></tr>
<tr><td>(45) Bekanntmachung des Hinweises auf die Patenterteilung:<br>18.07.84 Patentblatt 84/29</td><td>(74) Vertreter: Beyer, Werner, Dipl.Ing. et al, Patentanwälte Dipl.-Ing. W. Beyer Dipl.-Wirtsch.-Ing. B. Jochem Staufenstrasse 36 Postfach 174109, D-6000 Frankfurt / Main (DE)</td></tr>
<tr><td>(84) Benannte Vertragsstaaten:<br>AT BE CH FR GB IT LI NL SE</td><td></td></tr>
<tr><td>(56) Entgegenhaltungen:<br>EP - A - 0 016 500<br>CH - A - 598 766<br>DE - A - 1 432 492<br>DE - A - 1 432 552<br>DE - A - 2 123 732<br>DE - A - 2 411 020<br>DE - B - 1 136 604<br>FR - A - 2 030 369<br>FR - A - 2 101 614<br>FR - A - 2 390 336<br>GB - A - 592 715<br>US - A - 3 209 398<br>US - A - 3 964 236</td><td></td></tr>
</table>

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft ein Verfahren zum automatisierten Herstellen von Würsten im Strang unter Verwendung von synthetischem Schlauchmaterial für die Wursthüllen, das in einem ersten Arbeitsgang in größeren Mengen mechanisch zu einem Aufnahmeelement hin zu raupenförmigen Hohlkörpern gerafft wird, welche dann in einem anderen Arbeitsgang einzeln an die Füllstelle einer Wurstfüllmaschine gebracht und dort abschnittweise mit Brät gefüllt und verschlossen werden.

Die Erfindung betrifft weiterhin eine Vorrichtung zum automatisierten Herstellen von Würsten im Strang unter Verwendung von auf eine Vorratsrolle aufgewickeltem synthetischen Schlauchmaterial für die Wursthüllen, mit einer ein oder mehrere Füllrohre, von denen sich jeweils eines in Füllstellung befindet, und eine Verschließeinrichtung aufweisenden Füll- und Verschließmaschine sowie einer Überführungseinrichtung zum taktweisen Überführen von durch eine der Überführungseinrichtung zugeordnete Schneideinrichtung vom Schlauchstrang abgetrennten Schlauchabschnitten auf das in Füllstellung befindliche Füllrohr.

Zur Herstellung von Würsten dienen sogenannte Wurstfüllmaschinen, in denen das durch einen Trichter eingefüllte Fleisch zu Brät zerkleinert und durch ein seitlich vorstehendes Füllrohr in das zuvor auf dieses aufgezogene und am vorderen Ende verschlossene Hüllenmaterial ausgestoßen wird.

Seitdem die zunächst als Wursthüllen dienenden Naturdärme weitgehend durch synthetisches Schlauchmaterial ersetzt worden sind, das sich in beliebigen Längen herstellen läßt, haben sich zwei unterschiedliche Arten der Wurstherstellung herausgebildet, nämlich zum einen die vor allem bei größeren Hüllendurchmessern (Kalibern) angewandte Einzelwurstherstellung, bei der an einem Ende verschlossene »vorkonfektionierte« Hüllenabschnitte von einer einzelnen Wurst entsprechender Länge auf das Füllrohr der Füllmaschine aufgezogen, gefüllt und dann am anderen Ende verschlossen werden, und zum anderen die Wurstherstellung im Strang für im allgemeinen kleineren Kaliber, bei der ein längerer Schlauchabschnitt vom Vielfachen der Länge einer Wurst auf das Füllrohr der Wurstfüllmaschine aufgebracht und dann portionenweise abwechselnd gefüllt, eingeschnürt und verschlossen wird, so daß eine ganze Kette von Würsten entsteht.

Um die Arbeit des Aufziehens längerer Darmabschnitte auf die Füllrohre von Wurstfüllmaschinen zu erleichtern und den dafür erforderlichen Zeitaufwand zu verringern, sind Darmaufziehvorrichtungen mit gegen das Füllrohr anstellbaren, motorisch angetriebenen Reibrädern bekannt, die den zunächst von Hand an das Füllrohr angesetzten Darm mechanisch vollständig auf das Füllrohr ziehen und schieben (DD-A-61 775, DE-A-2 123 732). Diese Einrichtungen sind in erster Linie für Naturdärme bestimmt und haben auch nur für solche Eingang in die Praxis gefunden. Für das Aufziehen von synthetischem Schlauchmaterial wird demgegenüber ein anderer Weg beschritten, nämlich das vorhergehende axiale Raffen des Schlauchmaterials zu verhältnismäßig formsteifen raupenförmigen Hohlkörpern, die dann als solche auf das Füllrohr der Wurstfüllmaschine aufgesteckt und unter gebremstem Abziehen des Schlauchmaterials durch eine am Füllrohrende in Stellung gebrachte Darmbremse mit Wurstbrät gefüllt werden.

Zur Herstellung solcher raupenförmiger Hohlkörper dienen sogenannte Raffmaschinen, die in dem Bestreben, möglichst viele Meter an Schlauchmaterial auf einer durch die Länge der Füllrohre begrenzte Hohlstablänge bei gleichzeitig schonender Behandlung des empfindlichen Materials unterzubringen, immer weiter verbessert und vervollkommnet worden sind. Die beträchtlichen Kosten dieser Maschinen und des hochqualifizierten Personals zu ihrer Bedienung und Wartung sind ein wesentlicher Grund dafür, daß das Raffen — ebenso wie das obenerwähnte Konfektionieren der Einzelwursthüllen — von den Darmfabriken unmittelbar im Anschluß an die Herstellung des Schlauchmaterials vorgenommen wird und nur ganz wenige Wursthersteller einige Maschinen und Werkstätten für das Raffen unterhalten, wobei in jedem Falle die im Verhältnis zu ihrer Verarbeitung wesentlich schneller hergestellten raupenförmigen Hohlstäbe zwischengelagert werden.

Dem Bezug des Schlauchmaterials in Gestalt von zu Raupen gerafften Hohlstäben haften jedoch einige wesentliche Nachteile an:

Trotz der hohen Verdichtung nimmt das zu raupenförmigen Hohlstäben geraffte Schlauchmaterial wesentlich mehr Raum ein, als wenn es flach auf Vorratsrollen aufgewickelt ist, was zu einer nicht unerheblichen Erhöhung der Transport- und Lagerkosten führt.

Weiterhin ist der Verpackungsaufwand für die raupenförmigen Hohlstäbe zum Schutz gegen Transportschäden beträchtlich größer, wodurch nicht nur die Verpackungskosten erhöht werden, sondern auch zusätzliche Kosten für das Entfernen der Verpackungen anfallen.

Zu diesen Kosten treten die Kosten für das Aufstecken der Hohlkörper auf die Füllrohre der Wurstfüllmaschine. In diesem Zusammenhang bildet ein besonderes Problem die bei den meisten Hüllenmaterialien im trockenen Zustand fehlende Geschmeidigkeit sowohl zum Raffen als auch zum Füllen, die erst durch besonderes Wässern erhalten wird. Da andererseits die meisten Hüllenmaterialien im feuchten Zustand ein Nährboden für Bakterien sind, muß das Material nach dem Raffen in der Darmfabrik zunächst wieder getrocknet und dann beim Wurststeller erneut auf den zum Füllen erforderlichen Feuchtigkeitsgehalt gebracht werden, was nicht nur wegen der Faltendichte der gerafften Hohlstäbe im Vergleich zu ungerafftem Material viel Zeit benötigt, sondern durch die bewußt angestrebte Erweichung einen besonders feinfühligen Umgang beim nachfolgenden Aufziehen der Hohlstäbe auf das Füllrohr erfordert, dem nur die menschliche Hand gewachsen ist.

Nach der CH-A-598 766 sind zwar bereits auch automatisch arbeitende Aufzugseinrichtungen für gerafftes Schlauchmaterial bekannt. Gemäß den hierzu genannten weiteren Druckschriften trifft dies jedoch nur für eine inzwischen auch marktbekannte Sonderausführung einer Wurstfüllmaschine zu (DE-A-1 432 560), die mit einem axial beweglichen Füllrohr ausgestattet ist, welches durch die von einem Magazin in eine Greifeinrichtung nacheinander einfallenden und nach deren Schließen genau ausgerichteten Hohlstäbe hindurchstößt und dadurch das Schlauchmaterial in die Füllposition auf dem Füllrohr bringt. Diese Anordnung ist jedoch nur bei ungewässert weiterverarbeitbaren Materialien von dennoch ausreichender natürlicher Steifigkeit wie Cellulose und Collagen anwendbar, die auch innerhalb des Magazins und der Greifeinrichtung ihre Formbeständigkeit beibehalten. Außerdem führt das Vor- und Zurückfahren des Füllrohrs zu unerwünscht großen Totzeiten und steht dem Einsatz der bekannten Füllrohrrevolver (FR-A-2 101 614), wie sie zur Kleinhaltung der Totzeiten beim Aufziehen von Hand entwickelt worden sind, entgegen.

In Verbindung mit einem solchen Füllrohrrevolver ist zwar auch bereits versucht worden (FR-A-2 390 336 = DE-A-2 721 932), das Schlauchmaterial, unmittelbar von der Vorratsrolle kommend, auf ein nicht gerade in Füllstellung befindliches Füllrohr aufzubringen. Das hierbei auftretende besondere Problem des Öffnens des zunächst flachen Schlauchmaterials und seines Ansetzens an das Füllrohr soll dabei unter Anwendung von Unterdruck gelöst werden, indem das Material zunächst zum Zwecke des Öffnens durch eine Vakuumkammer geführt und anschließend von gesteuert beischwenk- und längsverschiebbaren Sauggreifern erfaßt wird, die es auf das Füllrohr aufziehen. Wegen dieses Aufziehens ist die bekannte Vorrichtung jedoch im Einklang mit ihrer bestimmungsgemäßen Verwendung allenfalls für das Aufbringen von verhältnismäßig kurzen Einzelwursthüllen brauchbar, die nicht länger als das Füllrohr sind, und eignet sich nicht für längere Wursthüllen, ganz zu schweigen von Schlauchabschnitten für die Wurstherstellung im Strang, die in Gestalt raupenförmiger Hohlstäbe auf den dann in Füllstellung verschwenkten Füllrohr zur Verfügung stehen müssen.

All dies erklärt, warum bisher trotz der oben geschilderten Nachteile sowohl die Vorkonfektionierung der Einzelwursthüllen als auch die Herstellung von raupenförmigen Hohlstäben für die Wurstherstellung im Strang den Darmherstellern überlassen wurde, obwohl sich dies in zusätzlichen Kosten niederschlägt, die letztlich die Wurstfabrik bzw. Metzgerei direkt oder über den Bezugspreis der Hohlstäbe indirekt zu tragen hat, wozu noch das Risiko der Verletzung des Schlauchmaterials bei der Handhabung der Hohlkörper hinzukommt.

Der Erfinder hat sich deshalb die Aufgabe gestellt, diesen Mängeln abzuhelfen und ein Verfahren sowie eine Vorrichtung zum automatisierten Herstellen von Würsten im Strang zu schaffen, bei denen sowohl der mechanische als auch der personelle Aufwand sowie der Aufwand für die Verpackung und Lagerung des Schlauchmaterials zwischen seiner Herstellung und der Verarbeitung an der Füllmaschine wesentlich herabgesetzt werden und dadurch eine kostengünstigere Wurstherstellung ermöglicht wird.

Ausgehend von dem bekannten Verfahren der eingangs genannten Art mit seinen beiden Arbeitsgängen löst die Erfindung diese Aufgabe verfahrensmäßig dadurch, daß in unmittelbarer Aufeinanderfolge der Arbeitsschritte das im füllfertigen Feuchtigkeitszustand befindliche Schlauchmaterial, von einer Vorratsrolle kommen, neben der Füllstelle über einen während des Raffvorgangs ortsfesten, vom Aufnahmeelement getrennten und mit diesem koaxialen langgestreckten Führungskörper ständig offengehalten und im Zeittakt der Füllung gerafft und danach zwischen Führungskörper und Aufnahmeelement abgeschnitten wird, während gleichzeitig ein zuvor geraffter raupenförmiger Hohlkörper nach seiner Überführung mittels des Aufnahmeelements an die Füllstelle gefüllt und verschlossen wird.

Die Erfindung löst sich damit von der bisher allgemein vertretenen Auffassung, die Herstellung von Würsten im Strang könne nur durch die Bereitstellung möglichst hoch verdichteter Hohlkörper auf Hochleistungs-Raffmaschinen verbessert werden, und verlagert statt dessen den Raffvorgang in die unmittelbare Nachbarschaft des Füll- und Verschließvorgangs, dem das Raffen zeitlich unmittelbar und im gleichen Takt wie das Füllen und Verschließen vorausgeht. Da der von Natur aus wesentlich langsamere Füll- und Verschließvorgang das Zeitmaß der Wurstherstellung bestimmt, steht für das Raffen im Vergleich zu der bisher bekannten Herstellung der Hohlkörper auf Hochleistungs-Raffmaschinen ein Mehrfaches an Zeit zur Verfügung, was eine schonende Behandlung des Materials unter Verwendung wesentlich einfacherer Raffeinrichtungen ermöglicht, zumal die sichere und schnellere automatische Überführung des Schlauchmaterials an die Füllstelle gar kein besonders intensives Raffen erfordert. Die Verwendung des Aufnahmeelements zur anschließenden Überführung an die Füllstelle gewährleistet eine größtmögliche Schonung des Hüllenmaterials, da dieses vom Beginn des Raffens bis zur Verarbeitung auf der Füllmaschine ständig mechanisch gehalten ist. Dies gestattet insbesondere auch bei Hüllenmaterialien mit zum Füllen nicht ausreichender natürlicher Geschmeidigkeit ein Befeuchten des von der Vorratsrolle kommenden Materials im Durchlauf durch ein Wasserbad, wodurch das bisher notwendige und zeitraubende Wässern der hochverdichteten Hohlkörper entfällt, und das Hüllenmaterial kann vor dem Raffen bereits den über den Rafferfordernissen liegenden füllfertigen Feuchtigkeitszustand besitzen, weil die Führung und Formhaltung des Schlauchmaterials durch das Aufnahmeelement bis zur Verarbeitung an der Füllstelle gewährleistet ist.

Das Öffnen des Schlauchmaterials mit Hilfe eines vom Aufnahmeelement getrennten und zu diesem koaxialen Führungskörper ist als solches bei gewöhnlichen Raffmaschinen bekannt (US-A-3 209 398). Obgleich das Aufnahmeelement dort auch bereits Teil eines Revolvers ist, dient es jedoch nicht zum Überführen an die Füllstelle einer Wurstfüllmaschine, sondern zum vorübergehenden Halten der raupenförmigen Hohlkörper während mehrerer Nachverdichtungsvorgänge an dem Revolver, woraufhin die Hohlkörper vom Aufnahmeelement abgestreift werden. Die bekannte Raffmaschine folgt demgemäß auch wiederum nur dem Bestreben, möglichst kompakte Raupen mit hohem Verdichtungsverhältnis auf schnellen und rationalem Wege zu erstellen.

Demgegenüber wird durch das erfindungsgemäße Verfahren eine vollständige Automatisierung der Herstellung von Würsten im Strang unter Verwendung von auf Rollen flach aufgewikkeltem Schlauchmaterial unter vorübergehender Raffung desselben mit gegenüber den bekannten Raffmaschinen wesentlich vereinfachten Einrichtungen und zugleich unter schonendster Behandlung des Schlauchmaterials ermöglicht.

Ausgehend von einer Vorrichtung der eingangs genannten Art, wie sie insoweit auch bereits durch die obenerwähnte Vorrichtung bekannt ist, bei der das Öffnen und Aufziehen des Schlauchmaterials mit Unterdruck erfolgt (FR-A-2 390 336), wird die obige Aufgabe vorrichtungsmäßig gelöst durch eine mit der Füll-Verschließ-Maschine im Takt arbeitende Raffeinrichtung, von welcher das von der benachbart aufgestellten Vorratsrolle abziehbare Schlauchmaterial unmittelbar zu einem an der Überführungseinrichtung angeordneten Aufnahmeelement hin zu raupenförmigen Hohlkörpern raffbar ist, wobei die Raffeinrichtung einen von dem Aufnahmeelement getrennten und mit diesem koaxialen langgestreckten Führungskörper aufweist, über welchen das Schlauchmaterial beim Raffen unter ortsfester Halterung des Führungskörpers zum Zwecke seiner Öffnung hinwegziebar ist, wobei die Schneideinrichtung zwischen dem Führungskörper und der Überführungseinrichtung angeordnet ist und der Führungskörper und/oder die Überführungseinrichtung zur Bildung eines Schneidspaltes axial voneinander wegbewegbar sind.

Nach einem ersten Merkmal zur zweckmäßigen Verwirklichung einer solchen Vorrichtung weist die Überführungseinrichtung wenigstens zwei wechselweise als Aufnahmeelement dienende und dazu alternativ vor den Brätauslaß der Füll-Verschließ-Maschine bewegbare Füllrohre auf, und die Raffeinrichtung ist vor einem anderen als dem vor dem Brätauslaß befindlichen Füllrohr angeordnet.

Eine andere vorteilhafte Ausgestaltungsform der erfindungsgemäßen Vorrichtung zeichnet sich dadurch aus, daß die Überführungseinrichtung aus einem mit vorzugsweise zwei um 180° in Umfangsrichtung versetzten Aufnahmerohren bestückten Revolverkopf besteht, der schrittweise um den halben Versatzwinkel weiterschaltbar ist, wobei in der einen von zwei aufeinanderfolgenden Schaltstellungen ein Aufnahmerohr mit der Achse der Raffeinrichtung und in der zweiten Schaltstellung ein Aufnahmerohr mit einem einzigen an der Füllmaschine fest angebrachten Füllrohr fluchtet.

Noch eine weitere vorteilhafte Ausgestaltungsform der erfindungsgemäßen Vorrichtung zeichnet sich dadurch aus, daß die Überführungseinrichtung eine als Aufnahmeelement dienende langgestreckte zylindrische Hohlkammer aufweist, die abwechselnd vor die Raffeinrichtung bzw. ein einziges fest an der Füll-Verschließ-Maschine angebrachtes Füllrohr bewegbar und in der letzteren Stellung zum Aufbringen des raupenförmigen Hohlkörpers auf das Füllrohr axial verschiebbar ist.

Sonstige Merkmale zur vorteilhaften Ausgestaltung der erfindungsgemäßen Anordnung ergeben sich aus den restlichen Unteransprüchen.

Die Erfindung wird nachstehend anhand einiger bevorzugter Ausführungsbeispiele näher erläutert. Es zeigt

Fig. 1 in perspektivischer Darstellung und stark schematisiert eine Vorrichtung zum automatisierten Herstellen von Wurst im Strang unter Verwendung von auf Vorratsrollen angelieferten synthetischem Schlauchmaterial,

Fig. 2 in ungefähr natürlicher Größe einen ausschnittsweisen Querschnitt durch die Überführungseinrichtung nach Fig. 1 im Bereich des mit der Raffeinrichtung fluchtenden Füllrohrs,

Fig. 3 eine Darstellung ähnlich Fig. 1 mit einer anderen Ausführungsform der Vorrichtung zur Wurstherstellung und

Fig. 4 noch eine weitere Darstellung ähnlich Fig. 1 mit einer dritten Ausführungsform der Vorrichtung.

Bei allen drei in der Zeichnung gezeigten Ausführungsbeispielen ist eine Wurstfüllmaschine 10 mit einem Einfülltrichter 12 für das in der Maschine zu zerkleinernde Fleisch vorgesehen, das die Füllmaschine als sogenanntes »Wurstbrät« über einen seitlichen Brätausstoß unter Druck wieder verläßt, um in synthetisches Schlauchmaterial abgefüllt und mit Hilfe einer an sich bekannten Verschließeinrichtung zu Würsten unter Setzung von Verschlußklammern abgeteilt zu werden.

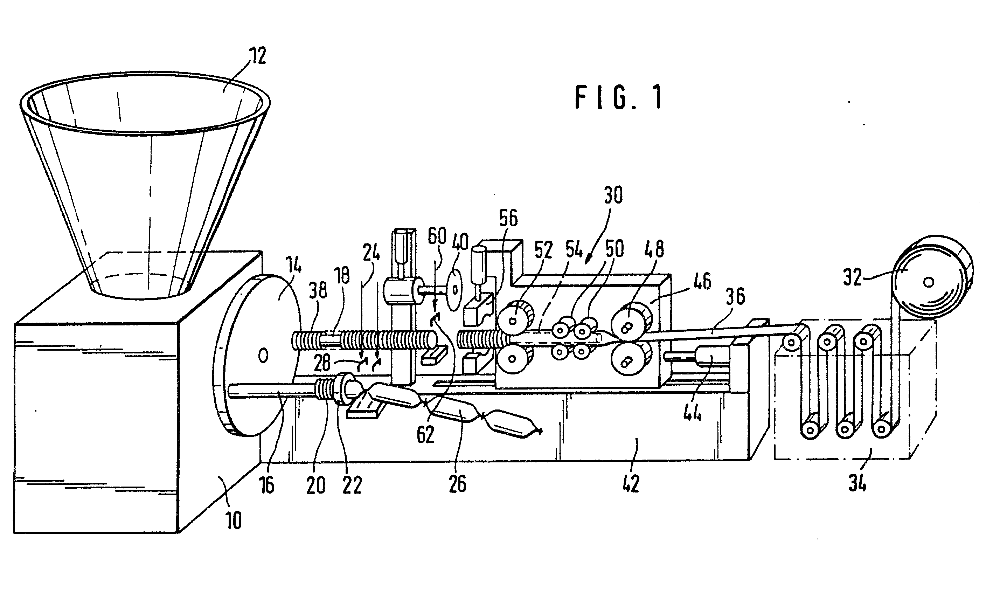

Bei der in Fig. 1 gezeigten Anordnung ist an der Brätausstoßseite der Füllmaschine 10 eine mit Hilfe eines nicht gezeigten Antriebs um 180° schaltbare Revolverscheibe 14 mit zwei Füllrohren 16, 18 angeordnet, von denen sich in jeder Schaltstellung das eine Füllrohr wie beispielsweise das Füllrohr 16 vor dem Brätausstoß der Wurstmaschine befindet und dazu dient, eine auf dem Füllrohr 16 angeordnete Schlauchraupe 20 unter Ausziehung derselben durch eine sogenannte Darmbremse 22 mit Wurstbrät zu einem Wurststrang füllen, der mit Hilfe einer nur schematisch angedeuteten Verschließvorrichtung 24 zu Würsten 26 unter Setzung von je zwei Klammern 28 zwischen je zwei Würsten abgeteilt wird.

Das andere Füllrohr 18 befindet sich in der gezeigten Stellung vor einer in ihrer Gesamtheit mit 30 bezeichneten Raffeinrichtung, mittels welcher ein von einer Vorratsrolle 32 über ein Wasserbad 34 zugeführter Strang 36 aus synthetischem Schlauchmaterial zu einem raupenförmigen Hohlkörper 38 auf dem Füllrohr 18 axial gerafft und nach Erreichen der gewünschten Länge mittels einer Schneideinrichtung 40 vom übrigen Schlauchstrang 36 abgetrennt wird. Die Raffeinrichtung 30 weist zu diesem Zweck einen auf einem langgestreckten Bett 42 mittels eines Kraftzylinders 44 verschieblichen Schlitten 46 auf, an welchem in an sich bekannter Weise ein Quetschwalzenpaar 48, zwei Paare von Vorzugs- und Führungswalzen 50 sowie ein die Raffwerkzeuge bildendes Raffwalzenpaar 52 angeordnet und von einem nicht gezeigten Antrieb zum Fördern und Raffen des Schlauchmaterials 36 antreibbar sind. Im Bereich der Vorzugswalzen 50 und der Raffwalzen 52 befindet sich innerhalb des Schlauchstrangs 36 in schwimmender Anordnung ein nur gestrichelt angedeutetes Führungsrohr 54, das nach Erreichen der gewünschten Raupenlänge auf dem Füllrohr 18 mittels einer aus zwei oder mehr pneumatisch oder hydraulisch betätigten Klemmbacken bestehenden Klemmbackenanordnung 56 über das geraffte Schlauchmaterial festgeklemmt werden kann.

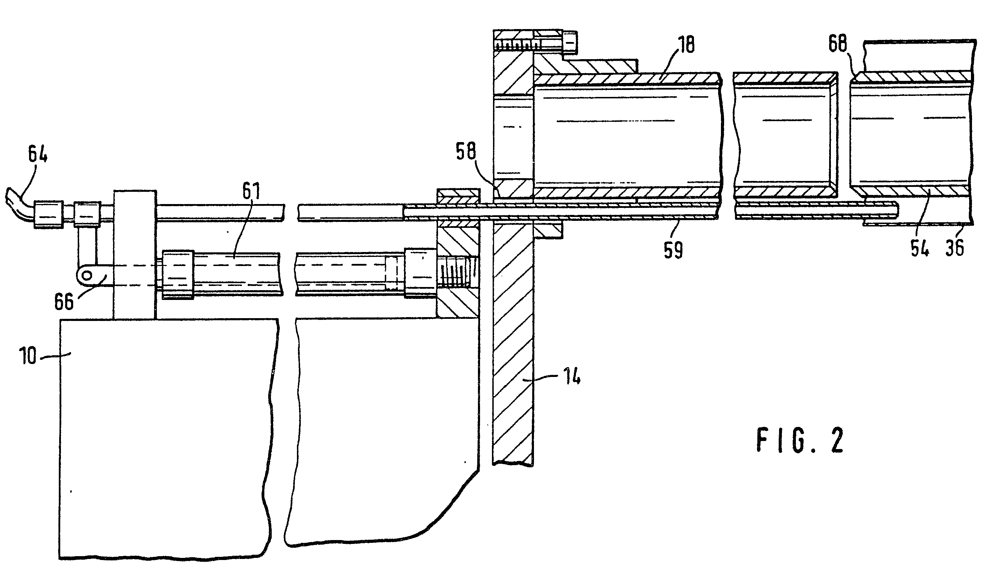

Wie Fig. 2 zeigt, hat die Revolverscheibe 14 radial außerhalb eines jeden Füllrohrs 18 eine Durchbrechung 58, durch welche eine Kanüle 59 mittels eines an der Füllmaschine 10 angeordneten Kraftzylinders 61 von der Rückseite der Revolverscheibe 14 her in eine Stellung an der Außenseite des Füllrohrs 18 bis in den Bereich des schwimmenden Führungsrohrs 54 einfahrbar ist, um die zum Aufblasen des Schlauchmaterials 36 beim Raffen erforderliche und unter geringem Überdruck stehende Luft zuzuführen, die mittels eines Schlauchs 64 in die Kanüle 59 eingeleitet wird. Wenn die Kolbenstange 66 des Kraftzylinders 61 ausgefahren wird, nimmt die Kanüle 59 eine zurückgezogene Stellung ein, in welcher sie aus der Revolverscheibe 14 herausgefahren ist, so daß diese ungehindert weitergeschaltet werden kann.

Die in Fig. 1 gezeigte Anordnung arbeitet wie folgt:

Es sei zunächst angenommen, daß der Schlauchstrang 36 durch die Walzenpaare 48, 50, 52 hindurch und über das schwimmende Führungsrohr 54 hinweg in die Raffeinrichtung 30 bis zum linken Ende des schwimmenden Führungsrohrs 54 geführt ist und ein leeres Füllrohr vor der Raffeinrichtung 30 steht. Nun wird zunächst durch Betätigen des Kraftzylinders 44 der Schlitten 46 so weit nach links bewegt, bis das mit einer konischen Anfasung 68 versehene Führungsrohr 54 sich in Anlage an dem entsprechend hohlkonisch ausgebildeten Ende des Füllrohrs 18 befindet. Die Klemmbackenanordnung 56 ist dabei geöffnet. Nun werden die Antriebe der Walzenpaare eingeschaltet, und die Vorzugswalzen 50 ziehen das Schlauchmaterial von der Trommel 32 durch das Wasserbad 34 hindurch ab, wo das Schlauchmaterial auf den zum Raffen und Füllen erforderlichen Feuchtigkeitsgehalt gebracht wird. Die Raffwalzen 52 raffen das abgezogene Schlauchmaterial unter Faltenbildung axial zusammen und bilden damit auf dem Füllrohr 18 den Hohlkörper 38. Wenn das Füllrohr 18 auf seiner gesamten Länge mit raupenförmig gerafftem Schlauchmaterial angefüllt ist, wird der Antrieb der Walzenpaare abgeschaltet, die Klemmbackenanordnung 56 schließt, und der Schlitten 46 wird durch Betätigen des Kraftzylinders 44 um eine verhältnismäßig kurze Strecke unter Mitnahme des Führungsrohrs 54 zurückgezogen, wodurch im Bereich zwischen dem Führungsrohr 54 und dem Füllrohr 18 der raupenförmige Hohlkörper 38 dergestalt aufgezogen wird, daß mit Hilfe einer dort angeordneten weiteren Verschließeinrichtung 60, die auch wieder nur schematisch angedeutet ist, eine Verschlußklammer 62 gesetzt werden kann und zwischen dieser und der Klemmbackenanordnung 56 das Schlauchmaterial mit Hilfe der Schneideinrichtung 40 abgeschnitten werden kann. Gleichzeitig wird die Kanüle 59 mit Hilfe des Kraftzylinders 61 aus dem Bereich der Revolverkopfscheibe 14 herausgefahren.

Wenn nun auch das Füllrohr 16 kein Schlauchmaterial mehr trägt, das heißt ein zuvor darauf befindlicher Hohlkörper vollständig verarbeitet ist, wird die dortige Verschleißeinrichtung 24 mit der daran befindlichen Darmbremse 22 aus dem Bereich des Füllrohrs 16 herausbewegt, und die Revolverkopfscheibe 14 wird daraufhin um 180° verschwenkt, so daß das leere Füllrohr 16 nunmehr vor der Raffeinrichtung 30 steht und das den neuen Hohlkörper 38 tragende Füllrohr 18 seine Stellung vor dem Brätausstoß der Maschine 10 eingenommen hat. Die Verschließeinrichtung 24 wird nun gegen das Füllrohr 18 mit dem darauf befindlichen Hohlkörper 38 bewegt, wobei die Darmbremse 22 das mit der Klammer 62 verschlossene Ende des Hohlkörpers 38 übergreift, und die Füllmaschine kann zum Füllen eines neuen Schlauchstrangs eingeschaltet werden. Damit befindet sich zugleich die Raffeinrichtung in der obenerwähnten Ausgangsstellung, und durch erneutes Vorschieben des Schlittens 46 und der Kanüle 59 kann ein neuer Raffvorgang beginnen, der im allgemeinen schneller beendet sein wird als die Verarbeitung des Hohlkörpers 38 auf dem Füllrohr 18 durch die Füllung mit Wurstbrät.

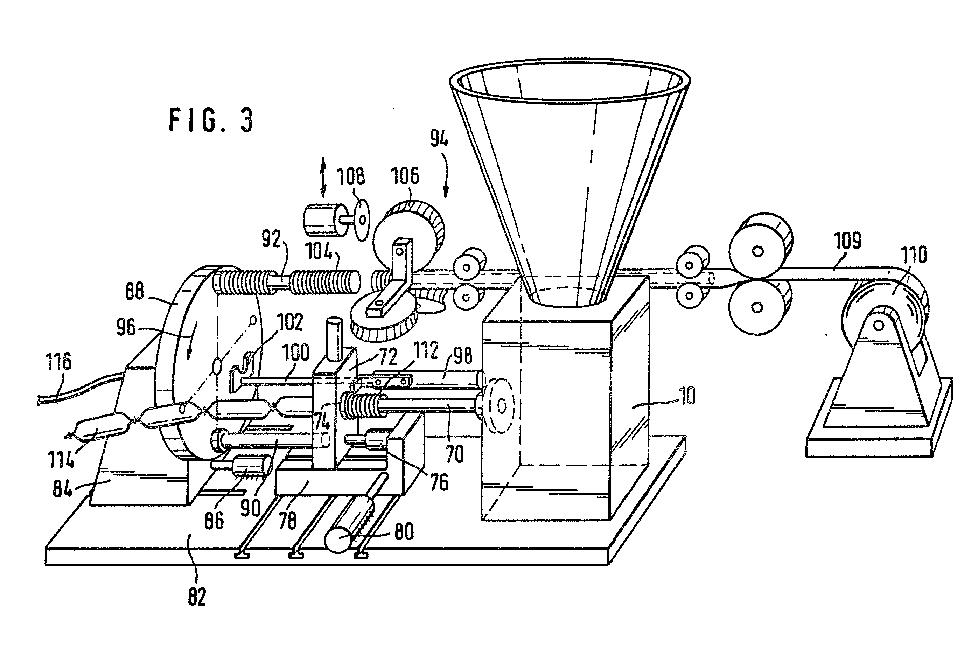

Bei der in Fig. 3 gezeigten Vorrichtung ist die Wurstfüllmaschine 10 mit einem einzigen, fest an dieser angeordneten Füllrohr 70 versehen, vor dem sich wiederum eine Verschließeinrichtung 72 mit einer Darmbremse 74 befindet. Die Verschließeinrichtung 72 ist mittels eines Kraftzylinders 76 auf einem Schlitten 78 in Längsrichtung des Füllrohrs 70 verfahrbar, und der Schlitten 78 kann seinerseits mittels eines Kraftzylinders 80 auf einer Maschinengrundplatte 82 quer zum Füllrohr 70 verfahren werden. Auf der Maschinengrundplatte ist ferner ein Ständer 84 mittels eines Kraftzylinders 86 in Längsrichtung des Füllrohrs 70 verfahrbar. Der Ständer 84 lagert eine Revolverscheibe 88 und enthält einen nicht gezeigten Antrieb, um diese schrittweise um 90° weiterzuschalten. An der Revolverscheibe 88 sind diametral gegenüberliegend zwei Aufnahmerohre 90, 92 befestigt, von denen sich in der gezeigten Stellung das Aufnahmerohr 92 vor einer in ihrer Gesamtheit mit 94 bezeichneten Raffeinrichtung befindet. Wenn die Revolverscheibe 88 um 90° in Richtung des Pfeils 96 weitergeschaltet wird, gelangt das Aufnahmerohr 92 in eine Stellung, in der es mit dem Füllrohr 70 fluchtet.

An der Verschließeinrichtung 72 ist ein langgestreckter Kraftzylinder 98 befestigt, dessen Kolbenstange 100 einen Abstreifer 102 trägt, der, wenn die Kolbenstange 100 ausgefahren ist und der Schlitten 78 mit der Verschließeinrichtung 72 aus dem Bereich des Füllrohrs 70 seitlich weggefahren ist, in die Schwenkbahn des Aufnahmerohrs 92 gelangt und dort eine auf diesem vor der Raffeinrichtung 94 gebildeten raupenförmigen Hohlkörper 104 am Ende erfaßt, wenn die Revolverscheibe 88 um 90° aus der in Fig. 3 gezeigten Stellung in Richtung des Pfeils 96 verschwenkt wird.

Die Raffeinrichtung 94 ist grundsätzlich wie die Raffeinrichtung in 30 aufgebaut und deshalb in Fig. 3 nur durch die einzelnen Walzen dargestellt, wobei in diesem Fall drei Raffwalzen 106 vorgesehen sind. Auch hier ist eine Schneideinrichtung 108 vorgesehen, mit welcher das Schlauchmaterial zwischen dem Aufnahmerohr 92 und der Raffvorrichtung 94 nach Beendigung des Raffvorgangs abgetrennt werden kann.

Das Schlauchmaterial 109 wird von einer Vorratsrolle 110 abgezogen und kann dabei wie bei der Anordnung nach Fig. 1 ein hier nicht gezeigtes Wasserbad durchlaufen, um das Schlauchmaterial auf den zum Raffen und Füllen erforderlichen Feuchtigkeitsgehalt zu bringen.

Die Anordnung nach Fig. 3 arbeitet wie folgt:

Es sei angenommen, daß das Aufnahmerohr 92 zunächst leer ist und sich auf dem Füllrohr 70 ein Hohlkörper 112 befindet.

Die Verschließeinrichtung 72 steht in der gezeigten Arbeitsstellung, in welcher die Darmbremse 74 das Ende des Füllrohrs 70 übergreift, und das Schlauchmaterial des Hohlkörpers 112 wird durch die Darmbremse hindurch unter dem Druck des von der Füllmaschine 10 gelieferten Wurstbräts abgezogen und unter Setzung von Klammern zu Würsten 114 abgeteilt.

Unabhängig hiervon wird der Ständer 84 durch Betätigen des Kraftzylinders 86 mit dem leeren Aufnahmerohr 92 gegen die Raffeinrichtung 94 vorgeschoben, und es wird ein neuer Hohlkörper 104 auf dem Aufnahmerohr 92 hergestellt. Wie ersichtlich, befindet sich dabei das andere Aufnahmerohr 92 in einer Stellung seitlich unterhalb des Füllrohrs 70, so daß die Herstellung der Würste 114 nicht behindert wird. Wenn der Hohlkörper 104 fertiggestellt ist, wird der Ständer 84 mit der Revolverscheibe 88 und den Aufnahmerohren 90, 92 zurückgefahren, und der Hohlkörper 104 wird vom restlichen Schlauchstrang 109 mit Hilfe der Schneideinrichtung 108 abgetrennt. Wenn nun auch das Schlauchmaterial des Hohlkörpers 112 auf dem Füllrohr 70 durch das Füllen mit Wurstbrät verbraucht ist, wird die Verschließeinrichtung 72 durch aufeinanderfolgendes Betätigen der Kraftzylinder 76, 80 zunächst axial vom Füllrohr 70 weggefahren und dann quer zu diesem in die obenerwähnte Stellung bewegt, in welcher sich der Abstreifer 102 bei ausgefahrener Kolbenstange 100 in der Schwenkbahn des Aufnahmerohrs 92 befindet. Hieraufhin wird die Revolverscheibe 88 um 90° weitergeschaltet, so daß der Abstreifer 102 das Ende des Hohlkörpers 104 auf dem Aufnahmerohr 92 erfaßt. Nun wird der Ständer 84 mit Hilfe des Kraftzylinders 86 wieder vorgeschoben und dadurch das Aufnahmerohr 92 in fluchtende Anlage am Füllrohr 70 gebracht. Durch Betätigen des Kraftzylinders 98 fährt daraufhin die Kolbenstange 100 ein, und der Abstreifer 102 schiebt den Hohlkörper 104 vom Aufnahmerohr 92 auf das Füllrohr 70. Sofort darauf fährt der Ständer 84 durch umgekehrtes Betätigen des Kraftzylinders 86 wieder zurück, und die Revolverscheibe 88 wird um weitere 90° weitergeschaltet, wodurch das leere Aufnahmerohr 90 vor die Raffeinrichtung gebracht wird. Die Verschließeinrichtung 72 wird daraufhin durch aufeinanderfolgendes Betätigen der Kraftzylinder 80, 76 wieder in ihre Arbeitsstellung gebracht, in welcher die Darmbremse 74 das Schlauchmaterial am Ende der Raupe 112 übergreift, und die Wurstfüllmaschine 10 wird erneut eingeschaltet.

Es leuchtet ein, daß bei dieser Anordnung der Anfang des Hohlkörpers 112 nicht schon unmittelbar nach seiner Herstellung verschlossen werden kann, weil sich das zu verschließende Ende am Einspannende des Aufnahmerohrs 92 befindet. In diesem Fall muß dann in geeigneter Weise nach dem Aufziehen des Hohlkörpers 104 auf das Füllrohr 70 zunächst das Materialende verschlossen werden, bevor die Verschließeinrichtung 72 mit der Darmbremse 74 in Arbeitsstellung gebracht wird.

Die Zufuhr der zum Raffen benötigten Luft erfolgt bei der Anordnung nach Fig. 3 über einen Schlauch 116 zum Ständer 84 und der Revolverscheibe 88, wo sie über eine nicht gezeigte Verteileinrichtung immer demjenigen Aufnahmerohr zugeführt wird, das vor der Raffeinrichtung 94 steht.

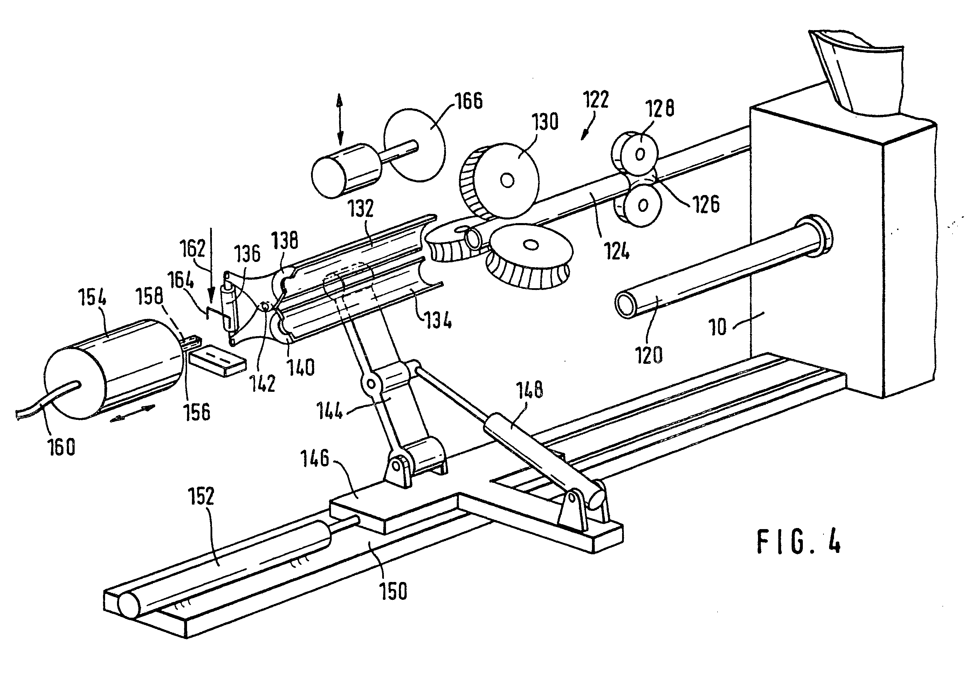

Bei der in Fig. 4 gezeigten Anordnung hat die Wurstfüllmaschine 10 ebenfalls nur ein einziges fest angebrachtes Füllrohr 120, und die im übrigen wie bei den vorbeschriebenen Anordnungen ausgebildete Raffeinrichtung 122 hat ein dazu paralleles schwimmendes Führungsrohr 124, das mit einer Einschnürung 126 versehen sein kann, in die über das nicht gezeigte Schlauchmaterial ein Walzenpaar 128 eingreift, das ein ungewolltes axiales Verschieben des Führungsrohrs 124 verhindert.

Im Unterschied zu den vorbeschriebenen Vorrichtungen wird die von den Rattwalzen 130 gebildete Raupe nicht auf ein Rohr aufgeschoben, sondern in eine Hohlkammer befördert, die aus zwei gegeneinander verschwenkbaren Halbschalen 132, 134 besteht, die mittels eines Kraftzylinders 136 gegeneinander verschwenkt werden können, so daß sie eine zylindrische Hohlkammer bilden. Die von der Raffeinrichtung 122 wegweisenden Enden der Halbschalen 132, 134 sind mit halbringförmigen Anschlägen 138, 140 versehen, die verhindern, daß der Hohlkörper aus der Hohlkammer heraustritt. Die Halbschalten 132, 134 sind mit ihrer gemeinsamen Schwenkachse 142 an einem Hebel 144 befestigt, der an einem Schlitten 146 schwenkbar angelenkt ist. Mit Hilfe eines Kraftzylinders 148 kann die von den Halbschalen 132, 134 gebildete Hohlkammeranordnung zwischen der gezeigten Stellung, in der sie mit der Raffeinrichtung 122 fluchtet, in eine zweite Stellung verschwenkt werden, in der sie mit dem Füllrohr 120 fluchtet. Der Schlitten 146 ist in Längsrichtung des Füllrohrs 120 auf einem Führungsbett 150 gelagert und kann mittels eines Kraftzylinders 152 zur Füllmaschine 10 hin verschoben werden.

An dem von der Raffeinrichtung 122 wegweisenden Ende der Hohlkammeranordnung 132, 134 ist ferner eine gesteuert axial verschiebliche Abdreheinrichtung 154 mit einem drehend antreibbaren Vierkant 156 angeordnet, die beim Raffen derart gegen die Hohlkammeranordnung 132, 134 vorgefahren wird, daß der Vierkant 156 in die Hohlkammer eingreift. Der Vierkant 156 enthält außerdem eine Bohrung 158, durch welche über einen Schlauch 160 die zum Raffen erforderliche Druckluft zuführbar ist.

Schließlich befinden sich an dem von der Raffeinrichtung 122 wegweisenden Ende der Hohlkammeranordnung 132, 134 eine schematisch bei 162 angeordnete Verschließeinrichtung und am anderen Ende der Hohlkammeranordnung eine Schneideinrichtung 166.

Die Anordnung nach Fig. 4 arbeitet wie folgt:

Es sei angenommen, daß die einzelnen Teile der Anordnung die in Fig. 4 gezeigte Stellung einnehmen und der Raffeinrichtung 122 (nicht gezeigtes) Schlauchmaterials zugeführt ist, das von den Raffrollen 130 erfaßt ist. Nun werden die beiden Halbschalen 132, 134 durch Betätigen des Kraftzylinders 136 geschlossen, und die Abdreheinrichtung 154 wird mit dem Vierkant 156 zwischen die Halbschalen 132, 134 eingefahren. Die Raffeinrichtung 122 wird daraufhin eingeschaltet, und die Raffwalzen 130 bilden innerhalb der Hohlkammeranordnung 132, 134 einen (nicht gezeigten) raupenförmigen Hohlkörper, dessen vorderes Ende von dem Vierkant 156 erfaßt wird. Wenn die Hohlkammeranordnung 132, 134 auf ihrer vollen Länge mit dem Hohlkörper gefüllt ist, wird die Abdreheinrichtung 154 eingeschaltet und gleichzeitig zurückgefahren, wodurch der Vierkant 156 das Schlauchmaterial am Ende des Hohlkörpers verdrillt und aus der Hohlkammeranordnung 132, 134 herauszieht. Dieses verdrillte Ende wird mit Hilfe der Verschließeinrichtung 162 durch eine Klammer 164 verschlossen. Gleichzeitig wird die Schneideinrichtung 166 betätigt und trennt den in der Hohlkammeranordnung befindlichen Hohlkörper vom übrigen Schlauchstrang ab.

Die Abdreheinrichtung 154 wird darauf in eine das Raupenende freigebende Stellung zurückgefahren, und die Hohlkammeranordnung 132, 134 wird durch Betätigen des Kraftzylinders 148 vor das Füllrohr 120 verschwenkt und durch Betätigen des Kraftzylinders 152 gegen die Füllmaschine 10 vorgeschoben, wodurch der in der Hohlkammeranordnung befindliche Hohlkörper auf das Füllrohr 120 aufgeschoben wird. Hieraufhin wird der Kraftzylinder 136 betätigt und öffnet die Halbschalen 132, 134, so daß beim anschließenden Zurückfahren des Schlittens 146 unter der Wirkung des Kraftzylinders 152 der Hohlkörper nicht wieder vom Füllrohr 120 abgezogen wird. Am Ende der Schlittenbewegung verschwenkt der Kraftzylinder 148 die Hohlkammeranordnung wieder vor die Raffeinrichtung 122 zur Wiederholung des vorbeschriebenen Vorgangs.

Auch bei dieser Vorrichtung ist eine (nicht gezeigte) Verschließeinrichtung vorhanden, die jetzt vor das Füllrohr 120 gebracht und mit einer daran angeordneten Darmbremse ein Stück auf das Füllrohr aufgeschoben wird. Die Füllmaschine ist damit zur Herstellung eines neuen Wurststrangs unter Verarbeitung des auf dem Füllrohr 120 befindlichen Schlauchmaterials bereit.

## Patentansprüche

1. Verfahren zum automatisierten Herstellen von Würsten im Strang unter Verwendung von synthetischem Schlauchmaterial für die Wursthüllen, das in einem ersten Arbeitsgang in größeren Längen mechanisch zu einem Aufnahmeelement hin zu raupenförmigen Hohlkörpern gerafft wird, welche dann in einem anderen Arbeitsgang einzeln an die Füllstelle einer Wurstfüllmaschine gebracht und dort abschnittsweise mit Brät gefüllt und verschlossen werden, dadurch gekennzeichnet, daß in unmittelbarer Aufeinanderfolge der Arbeitsschritte das mit füllfertigen Feuchtigkeitszustand befindliche Schlauchmaterial, von einer Vorratsrolle kommend, neben der Füllstelle über einen während des Raffvorgangs ortsfesten, vom Aufnahmeelement getrennten und mit diesem koaxialen langgestreckten Führungskörper ständig offengehalten und im Zeittakt der Füllung gerafft und danach zwischen Führungskörper und Aufnahmeelement abgeschnitten wird, während gleichzeitig ein zuvor geraffter raupenförmiger Hohlkörper nach seiner Überführung mittels des Aufnahmeelements an die Füllstelle gefüllt und verschlossen wird.

2. Verfahren nach Anspruch 1, dadurch gekennzeichnet, daß auf ein nicht in Füllstellung befindliches Füllrohr (18) eines mehrere Füllrohre (16, 18) tragenden Revolverkopfs (14) als Aufnahmeelement gerafft wird.

3. Verfahren nach Anspruch 1 oder 2, dadurch gekennzeichnet, daß in den Innenraum einer einseitig offenen Hülse (132, 134) als Aufnahmeelement gerafft wird.

4. Vorrichtung zum automatisierten Herstellen von Würsten im Strang unter Verwendung von auf eine Vorratsrolle (32; 110) aufgewickeltem synthetischen Schlauchmaterial für die Wursthüllen, mit einer ein oder mehrere Füllrohre (16, 18; 70, 120), von denen sich jeweils eines in Füllstellung befindet, und eine Verschließeinrichtung (24; 72) aufweisenden Füll-Verschließ-Maschine (17) sowie einer Überführungseinrichtung (14, 18; 88, 90, 92; 132—148) zum taktweisen Überführen von durch eine der Überführungseinrichtung zugeordnete Schneideinrichtung (40, 108, 166) vom Schlauchstrang abgetrennten Schlauchabschnitten auf das in Füllstellung befindliche Füllrohr (18; 70; 120), gekennzeichnet durch eine mit der Füll-Verschließ-Maschine (10) im Takt arbeitende Raffeinrichtung (30; 94; 122), von welcher das von der benachbart aufgestellten Vorratsrolle (32; 110) abziehbare Schlauchmaterial (36; 109) unmittelbar zu einem an der Überführungseinrichtung angeordneten Aufnahmeelement (18; 92; 132, 134) hin zu raupenförmigen Hohlkörpern (38; 104) raffbar ist, wobei die Raffeinrichtung einen von dem Aufnahmeelement (18; 92; 132, 134) getrennten und mit diesem koaxialen langgestreckten Führungskörper (54; 124) aufweist, über welchen das Schlauchmaterial (36; 109) beim Raffen unter ortsfester Halterung des Führungskörpers zum Zwecke seiner Öffnung hinwegziehbar ist, wobei die Schneideinrichtung (40; 108; 166) zwischen dem Führungskörper und der Überführungseinrichtung angeordnet ist und der Führungskörper und/oder die Überführungseinrichtung zur Bildung eines Schneidspaltes axial voneinander wegbewegbar sind.

5. Vorrichtung nach Anspruch 4, dadurch gekennzeichnet, daß die Überführungseinrichtung (14) wenigstens zwei wechselweise als Aufnahmeelement dienende und dazu alternativ vor den Brätauslaß der Füll-Verschließ-Maschine (10) bewegbare Füllrohre (16, 18) aufweist und die Raffeinrichtung (30) vor einem anderen (18) als dem vor dem Brätauslaß befindlichen (16) Füllrohr angeordnet ist.

6. Vorrichtung nach Anspruch 5, dadurch gekennzeichnet, daß die Füllrohre (16, 18) an einem schaltbaren Revolverkopf (Revolverscheibe 14) angeordnet sind.

7. Vorrichtung nach Anspruch 5 oder 6, dadurch gekennzeichnet, daß die Raffeinrichtung (30) zu den Füllrohren (16, 18) gesteuert axial verschiebbar ist und daß die Schneideinrichtung (40) mit einer weiteren Verschließeinrichtung (60) kombiniert ist.

8. Vorrichtung nach einem der Ansprüche 5 bis 7, gekennzeichnet durch eine an der Außenseite des vor der Raffeinrichtung (30) befindlichen Füllrohrs (18) bis in den Raffbereich einfahrbare Kanüle (59) zum Zuführen von Luft unter geringem Überdruck in das zu raffende Schlauchmaterial (36), die beim Wechsel der Füllrohre (16, 18) aus dem Füllrohrbereich herausbewegbar ist.

9. Vorrichtung nach Anspruch 8, dadurch gekennzeichnet, daß die Raffeinrichtung (30) mit einer steuerbaren Klemmbackenanordnung (56) versehen ist, in welcher das geraffte Schlauchmaterial (36, 38) vor dem Zurückverschieben der Raffeinrichtung (30) an dem Führungskörper (54) festklemmbar ist, so daß beim Zurückverschieben das geraffte Schlauchmaterial (36, 38) im Bereich der Schneideinrichtung (40) auseinandergezogen wird.

10. Vorrichtung nach Anspruch 4, dadurch gekennzeichnet, daß die Überführungseinrichtung aus einem mit vorzugsweise zwei um 180° in Umfangsrichtung versetzten Aufnahmerohren (90, 92) bestückten Revolverkopf (Revolverscheibe 88) besteht, der schrittweise um den halben Versatzwinkel weiterschaltbar ist, wobei in der einen von zwei aufeinanderfolgenden Schaltstellungen ein Aufnahmerohr (92) mit der Achse der Raffeinrichtung (94) und in der zweiten Schaltstellung ein Aufnahmerohr (90) mit einem einzigen an der Füllmaschine (10) fest angebrachten Füllrohr (70) fluchtet.

11. Vorrichtung nach Anspruch 10, gekennzeichnet durch einen längsverschieblichen Abstreifer (102) zum Aufschieben eines auf dem weitergeschalteten Raffrohr (90) befindlichen raupenförmigen Hohlkörpers (104) auf das damit fluchtende Füllrohr (70).

12. Vorrichtung nach Anspruch 4, dadurch gekennzeichnet, daß die Überführungseinrichtung eine als Aufnahmeelement dienende langgestreckte zylindrische Hohlkammer (132, 134) aufweist, die abwechselnd vor die Raffeinrichtung (122) bzw. ein einziges fest an der Füll-Verschließ-Maschine (10) angebrachtes Füllrohr (120) bewegbar und in der letzteren Stellung zum Aufbringen des raupenförmigen Hohlkörpers auf das Füllrohr (120) axial verschiebbar ist.

13. Vorrichtung nach Anspruch 12, dadurch gekennzeichnet, daß die Hohlkammer aus mindestens zwei zur Freigabe der auf das Füllrohr (120) aufgebrachten Schlauchraupen voneinander wegbewegbaren Halbschalen (132, 134) besteht.

14. Vorrichtung nach Anspruch 12 oder 13, dadurch gekennzeichnet, daß die Hohlkammer (132, 134) an ihrem von der Raffeinrichtung (122) wegweisenden Ende eine Luftzuführ- und Verschließeinrichtung (154—162) aufweist.

15. Vorrichtung nach Anspruch 14, dadurch gekennzeichnet, daß die Luftzuführ- und Verschließeinrichtung von einer in die Hohlkammer (132, 134) einfahrbaren Abdreheinrichtung (154, 156) mit an dieser enthaltenen Mitteln zum Zuführen von Luft (158, 160) sowie einer Verschließeinrichtung (162) gebildet ist.

16. Vorrichtung nach einem der Ansprüche 4 bis 15, dadurch gekennzeichnet, daß der Raffeinrichtung (30) ein vom Schlauchmaterial (36) durchlaufenes Wasserbad (34) vorgeschaltet ist, in welchem das Schlauchmaterial (36) auf den zum Raffen und Füllen erforderlichen Feuchtigkeitsgehalt bringbar ist.

## Claims

1. A method for the automated production of string sausages using a synthetic tubular material for the sausage casing, in which in a first step the tubular material is shirred mechanically in substantial lengths towards a receiving element to form corrugated hollow bodies which, in a further step, are then taken individually to the stuffing position of a sausage-stuffing machine and are there filled in sections with stuffing material and closed, characterized in that in immediate succession of the steps the tubular material, possessing a moisture content suitable for the stuffing operation and coming from a supply roll, is held permanently open near the stuffing position by way of an elongate guide body, which is stationary during the shirring operation and which is separate from and coaxial with the receiving element, and in that the tubular material is shirred in synchronism with the stuffing operation and subsequently is cut off between the guide body and the receiving element, while simultaneously a previously shirred corrugated hollow body is stuffed and closed after its transfer to the stuffing position by means of the receiving element.

2. A method according to claim 1, characterized in that shirring is effected on a stuffing tube (18) when said stuffing tube (18) is not in the stuffing position, which tube is on a rotary head (14) carrying a plurality of stuffing tubes (16, 18) and acts as the receiving element.

3. A method according to claim 1 or 2, characterized in that shirring is effected in the interior of a sleeve (132, 134) open at one end and acting as the receiving element.

4. A device for the automated production of string sausages using for the sausage casing a synthetic tubular material wound on a supply roll (32; 110), the device having one or more stuffing tubes (16, 18; 70; 120), one of which is respectively situated in a stuffing position, and a stuffing and closing machine (17) having a closing device (24; 72), and also a transfer device (14, 18; 88, 90, 92; 132—148) for the cyclical transfer of tubular sections, which are separated from the length of tubular material by a cutter (40, 108, 166) associated with the transfer device, to the stuffing tube (18; 70; 120) situated in the stuffing position, characterized by including a shirring device (30; 94; 122) operating in synchronism with the stuffing and closing machine (10), from which shirring device the tubular material (36; 109) withdrawable from the adjacently arranged supply roll (32; 110) can be shirred directly towards a receiving element (18; 92; 132, 134) disposed on the transfer device to form corrugated hollow bodies (38; 104), wherein the shirring device includes an elongate guide body (54; 124) separate from and coaxial with the receiving element (18; 92; 132, 134), by way of which guide body the tubular material (36; 109) can be drawn away during shirring for the purpose of opening it, the guide body being held stationary, wherein the cutter (40; 108; 166) is disposed between the guide body and the transfer device, and wherein the guide body and/or the transfer device can be moved axially away from one another to form a cutting clearance.

5. A device according to claim 4, characterized in that the transfer device (14) has at least two stuffing tubes (16, 18) acting alternately as the receiving element and being movable alternately in front of the stuffing material outlet of the stuffing and closing machine (10), and in that the shirring device (30) is disposed in front of a stuffing tube (18) different from that (16) situated in front of the stuffing material outlet.

6. A device according to claim 5, characterized in that the stuffing tubes (16, 18) are arranged on a shiftable rotary head (rotary plate 14).

7. A device according to claim 5 or 6, characterized in that the shirring device (30) can be moved to the stuffing tubes (16, 18) whilst being guided axially, and in that the cutter (40) is combined with a further closing device (60).

8. A device according to claims 5 to 7, characterized by including a cannula (59) which is disposed on the outside of the stuffing tube (18) situated in front of the shirring device (30) and which is insertable into the shirring zone, the cannula serving to feed air under a slight overpressure into the tubular material (36) to be shirred, and being movable out of the stuffing tube zone when the stuffing tubes (16, 18) are alternated.

9. A device according to claim 8, characterized in that the shirring device (30) is provided with a controllable clamping jaw assembly (56), in which the shirred tubular material (36, 38) can be clamped on the guide body (54) prior to the backward movement of the shirring device (30), so that during the backward movement the shirred tubular material (36, 38) is drawn apart in the region of the cutter (40).

10. A device according to claim 4, characterized in that the transfer device comprises a rotary head (rotary plate 88) which is provided preferably with two receiving tubes (90, 92) displaced through 180° in the peripheral direction and which can be shifted in stages through one half the displacement angle, wherein in one of two successive shift positions one receiving tube (92) is aligned with the axis of the shirring device (94) and in the second shift position one receiving tube (90) is aligned with a single stuffing tube (70) securely mounted on the stuffing machine (10).

11. A device according to claim 10, characterized by including a longitudinally displaceable pusher (102) for pushing a corrugated hollow body (104) situated on the further shifted shirring tube (90) on to the receiving tube (70) aligned therewith.

12. A device according to claim 4, characterized in that the transfer device has, serving as the receiving element, an elongate cylindrical hollow chamber (132, 134) which is movable alternately in front of either the shirring device (122) or a single stuffing tube (120) mounted securely on the stuffing and closing machine (10), and which in its latter position is axially displaceable for applying a corrugated hollow body on to the stuffing tube (120).

13. A device according to claim 12, characterized in that the hollow chamber comprises at least two half shells (132, 134) which can be moved apart to release the shirred tubular disposed on the stuffing tube (120).

14. A device according to claim 12 or 13, characterized in that the hollow chamber (132, 134) has at its end facing away from the shirring device (122) air-supply and closing devices (154—162).

15. A device according to claim 14, characterized in that the air-supply and closing devices are formed by a twisting device (154, 156), which is movable into the hollow chamber (132, 134) and which incorporates air-supply means (158, 160), and by a closing device (162).

16. A device according to one of claims 4 to 15, characterized in that the shirring device (30) is preceded by a water bath (34) through which the tubular material (36) passes and in which the tubular material (36) can be given the moisture content necessary for the shirring and stuffing operation.

**Revendications**

1. Procédé pour la production automatique de saucisses en chapelets en utilisant des enveloppes synthétiques comme boyaux, dans lequel, au cours d'une première phase, l'enveloppe synthétique est plissée mécaniquement à partir de grandes longueurs pour former des corps creux à plis serrés, lesquels sont ensuite, au cours d'une autre phase de travail, amenés individuellement au post de remplissage d'une machine à fabriquer les saucisses où ils sont remplis section par section avec le chair, puis fermés aux extrémités, ce procédé étant, caractérisé par le fait qu'au cours de la succession ininterrompue d'opérations l'enveloppe à boyaux qui se trouve à l'état d'humidification nécessaire pour assurer une fabrication correcte se déroule à partir d'un rouleau d'alimentation, puis est constamment maintenue ouverte près du poste de remplissage en passant sur un corps de guidage qui est maintenu immobile pendant l'opération de plissage et séparé de l'organe récepteur tout en s'étendant coaxialement le long de ce dernier, l'enveloppe étant plissée pendant la phase de remplissage et ensuite sectionnée entre le corps de guidage et l'organe récepteur, tandis que, simultanément, un autre corps creux, préalablement plissé, est rempli et fermé après son transfert par l'organe récepteur vers le poste de remplissage.

2. Procédé selon la revendication 1, caractérisé par le fait que, sur un mandrin de remplissage (18) qui ne se trouve pas en position de remplissage, un disque-revolver (14) comportant plusieurs mandrins de remplissage (16, 18) est soumis au plissage en tant qu'organe récepteur.

3. Procédé selon l'une ou l'autre des revendications 1 ou 2, caractérisé par le fait que, dans l'espace interne, une enveloppe (32, 34) ouverte d'un côté est plissée en tant qu'organe récepteur.

4. Dispositif pour la production automatique de saucisses en chapelets en utilisant comme boyau une enveloppe synthétique continue enroulée sous forme d'un rouleau d'alimentation (32; 110), avec un ou plusieurs mandrins de remplissage (16, 18; 70, 120) qui se trouvent chacun à tour de rôle en position de remplissage, et une machine de remplissage et de fermeture (17) comportant un dispositif de fermeture proprement dit (24, 72) ainsi qu'un dispositif de transfert (14, 18; 88, 90, 92; 132—148) pour assurer le transfert périodique de sections de boyau séparées du chapelet par un dispositif de coupe (40) afin de placer ces sections sur un mandrin de remplissage (18; 70; 120) qui se trouve au post de remplissage, caractérisé par le fait qu'il comprend un dispositif de plissage (30; 94; 122) qui fonctionne en synchronisme avec la machine de remplissage et de fermeture (10) et à partir duquel l'enveloppe à boyaux (36; 109) déroulée à partir d'un rouleau d'alimentation voisin (32; 110) peut être plissée directement pour former en continu sur un organe récepteur (18; 92; 132, 134) prévu sur le dispositif de transfert un corps creux plissé (38; 104) de telle sorte que le dispositif de plissage comporte un corps de guidage (54; 124) séparé dudit corps récepteur (18; 92; 132, 134) tout en étant coaxial et orienté longitudinalement par rapport à ce corps, l'enveloppe à boyaux (36; 109) pouvant être étirée afin de l'ouvrir sur ce corps de guidage maintenu immobile à cet effet, le dispositif de coupe (40; 108; 166) étant disposé entre le corps de guidage et le dispositif de transfert, ce corps de guidage et/ou le dispositif de transfert pouvant être éloignés axialement l'un de l'autre afin de ménager entre eux un intervalle permettant la coupe du boyau.

5. Dispositif selon la revendication 4, caractérisé par le fait que le dispositif de transfert (14) comprend au moins deux mandrins mobiles de remplissage (16, 18) qui servant alternativement d'organes récepteurs qui peuvent se présenter à tour de rôle en alignement avec l'éjecteur de chair de la machine de remplissage et de fermeture (10), tandis que le dispositif de plissage (30) est amené en position d'alignement avec un mandrin de remplissage (18) autre que celui (16) qui est placé en position d'alignement avec l'éjecteur de chair.

6. Dispositif selon la revendication 5, caractérisé par le fait que les mandrins de remplissage (16, 18) sont agencés sur un disque-revolver (14) commutable en rotation cran par cran.

7. Dispositif selon l'une ou l'autre des revendications 5 ou 6, caractérisé par le fait que le dispositif de plissage (30) peut se déplacer axialement par rapport aux mandrins de remplissage (16, 18) et que le dispositif de coupe (40) est combiné avec un autre dispositif de fermeture (60).

8. Dispositif selon l'une quelconque des revendications 5 à 7, caractérisé par le fait que sur le côté externe du mandrin de remplissage (18) qui se trouve en face du dispositif de plissage (30) il est prévu une canule (59) que l'on peut enfoncer jusqu'à l'intérieur de la zone de plissage pour introduire de l'air sous faible pression dans l'enveloppe à boyaux à plisser (36), cette canule pouvant être rappelée hors de ladite zone du mandrin de remplissage lors du changement de mandrin de remplissage (16, 18).

9. Dispositif selon la revendication 8, caractérisé par le fait que le dispositif de plissage (30) est pourvu d'un dispositif d'agrafage commandé (56) dans lequel l'enveloppe à boyaux plissée (36, 38) peut être enserrée énergiquement sur le corps de guidage (54) avant le rappel en arrière du dispositif de plissage (30) afin qu'au cours de ce mouvement de recul l'enveloppe à boyaux plissée (36, 38) soit séparée dans la zone du dispositif de coupe (40).

10. Dispositif selon la revendication 4, caractérisé par le fait que le dispositif de transfert se compose d'un disque-revolver (88) dans lequel sont fichés deux tubes récepteurs (90, 92) et qui peut être commuté pas-à-pas en rotation sur la moitié de l'angle de décalage entre ces tubes récepteurs, de telle sorte que dans l'une des deux positions successives de commutation un premier tube récepteur (92) soit aligné avec l'axe du dispositif de plissage (94), alors que dans la seconde position de commutation c'est l'autre tube récepteur (90) qui est aligné avec un mandrin unique de remplissage (70) monté à poste fixe sur la machine de remplissage.

11. Dispositif selon la revendication 10, caractérisé par le fait qu'on organe dévêtisseur à mobilité longitudinale (102) est prévu pour enlever un corps creux plissé (104) qui se trouve sur un tube de plissage commuté (90) afin de la transférer sur un mandrin de remplissage (70) aligné avec ce tube.

12. Dispositif selon la revendication 4, caractérisé par le fait que le dispositif de transfert comporte une chambre creuse, cylindrique et longitudinale (132, 134) qui sert d'organe récepteur, laquelle peut se déplacer de façon à se trouver en alignement axial alternativement avec le dispositif de plissage (122) et avec un mandrin unique de remplissage (120) prévu à post fixe sur la machine de remplissage et de fermeture (10), de façon à pouvoir amener le corps creux et plissé sur le mandrin de remplissage (120) dans cette dernière position.

13. Dispositif selon la revendication 12, caractérisé par le fait que la chambre creuse se compose d'au moins deux demi-coquilles (132, 134) pouvant s'écarter l'une de l'autre pour libérer l'enveloppe à boyaux qui recouvre le mandrin de remplissage (120).

14. Dispositif selon l'une ou l'autre des revendications 12 ou 13, caractérisé par le fait que la chambre creuse (132, 134) comporte sur son extrémité opposée au dispositif de plissage (132) un dispositif d'amenée d'air et de fermeture (154—162).

15. Dispositif selon la revendication 14, caractérisé par le fait que le dispositif d'amenée d'air et de fermeture comprend d'une part un dispositif rotatif (154, 156) pouvant être introduit dans une chambre creuse (132, 134) et auquel sont incorporés des moyens (158, 160) pour introduire l'air, et d'autre part un dispositif de fermeture proprement dit (162).

16. Dispositif selon l'une quelconque des revendications 4 à 15, caractérisé par le fait qu'il est prévu en amont du dispositif de remplissage (30) un bain d'eau (34) que traverse l'enveloppe à boyaux (36) afin que celle-ci s'imprègne du degré d'humidité nécessaire pour effectuer correctement le plissage et le remplissage.

FIG. 1

FIG. 2

FIG. 3

FIG. 4

0 025 923